# EUROPEAN PATENT APPLICATION

(11) **EP 3 321 288 A1**
(43) Date of publication of application: **16.05.2018**
(21) Application number: 16198262.4
(22) Date of filing: 10.11.2016
(51) Int. Cl.: C08F 2/01, C08F 2/34

(54) **OLEFIN POLYMERIZATION PROCESS IN A GAS-PHASE REACTOR COMPRISING A RISER UNIT AND A DOWNCOMER**

(71) Applicant: Basell Polyolefine GmbH, 50389 Wesseling (DE)
(72) Inventor: Meier, Gerhardus, 60320 Frankfurt/Main (DE); Schüller, Ulf, 64331 Weiterstadt (DE); Mei, Gabriele, 44122 Ferrara (IT); Covezzi, Massimo, 44122 Ferrara (IT); Baita, Pietro, 44122 Ferrara (IT); Marturano, Lorella, 44122 Ferrara (IT)
(74) Representative: Seelert, Stefan

(57) **Abstract**

A process for preparing an olefin polymer comprising polymerizing one or more olefins in a gas-phase polymerization reactor comprising a riser unit, in which growing polymer particles flow upwards under fluidization, fast fluidization or transport conditions, and a downcomer, in which growing polymer particles flow downward in a densified form, wherein the hold-up of polymer particles in the downcomer is from 55 wt.% to 80 wt.% of the total hold-up of polymer particles in the gas-phase polymerization reactor.

## Description

### FIELD OF THE INVENTION

The present disclosure provides processes for preparing an olefin polymer comprising polymerizing one or more olefins in the presence of a polymerization catalyst in a gas-phase polymerization reactor comprising a riser unit, in which growing polymer particles flow upwards under fluidization, fast fluidization or transport conditions, and a downcomer, in which growing polymer particles flow downward in a densified form. The present disclosure provides in particular processes, in which the gas-phase polymerization reactor is a multizone circulating reactor comprising a riser unit which is a riser, in which growing polymer particles flow upwards under fast fluidization or transport conditions, and the riser and the downcomer are interconnected and polymer particles leaving the riser enter the downcomer and polymer particles leaving the downcomer enter the riser, thus establishing a circulation of polymer particles through the riser and the downcomer.

### BACKGROUND OF THE INVENTION

Polymerizing olefins in circulating gas-phase polymerization reactor allows producing olefin polymers with a high productivity per unit volume of the reactor and with a high flexibility in the composition of the prepared polymers. Such circulating reactors are, for example, described in WO 97/04015 A1 and WO 00/02929 A1. WO 2005/019280 A1 describes polymerization processes in a combination of at least two gas-phase reactors, where at least one of the gas-phase reactors is a circulating gas-phase polymerization reactor.

WO 2006/120187 A1 discloses a process for polymerizing olefins in a multizone circulating reactor in which the gaseous composition in a portion of the downcomer is maintained substantially similar to the gaseous composition reacting in the riser.

For operating a polymerization zone of a circulating gas-phase polymerization reactor as riser, relatively large quantities of gas are needed for transporting the growing polymer particles within the riser upwards. Accordingly, the volume fraction of polymer particles in the gas-polymer mixture within the riser is relatively low, what is adverse to the space-time yield of a circulating gas-phase polymerization reactor.

There is accordingly a need to improve the space-time yield of olefin polymerizations in a circulating gas-phase polymerization reactor without detrimental effects on the properties of the produced polymers. Furthermore, the formation of chunks or agglomerates has to be avoided because this could result in a reduced quality of the prepared olefin polymers and may also lead to plugging of the product discharge system with a subsequently required shut-down of the polymerization process.

### SUMMARY OF THE INVENTION

The present disclosure provides a process for preparing an olefin polymer comprising polymerizing one or more olefins in the presence of a polymerization catalyst in a gas-phase polymerization reactor comprising a riser unit, in which growing polymer particles flow upwards under fluidization, fast fluidization or transport conditions, and a downcomer, in which growing polymer particles flow downward in a densified form, wherein the hold-up of polymer particles in the downcomer is from 55 wt.% to 80 wt.% of the total hold-up of polymer particles in the gas-phase polymerization reactor.

In some embodiments, the gas-phase polymerization reactor is a multizone circulating reactor in which the riser unit is a riser, in which growing polymer particles flow upwards under fast fluidization or transport conditions, and the riser and the downcomer are interconnected and polymer particles leaving the riser enter the downcomer and polymer particles leaving the downcomer enter the riser, thus establishing a circulation of polymer particles through the riser and the downcomer.

In some embodiments, the riser unit, in which the growing polymer particles flow upwards, comprises a fluidized bed of growing polymer particles.

In some embodiments, the gas-phase polymerization reactor comprises two or more polymerization zones and the polymerization zones have a content of inert components in the reaction gas mixture from 30 to 99 vol.%.

In some embodiments, the olefin polymer is an ethylene polymer prepared by homopolymerizing ethylene or copolymerizing ethylene with one or more comonomers.

In some embodiments, the ethylene polymer is an ethylene copolymer having a comonomer content from 0.01 wt.% to 15 wt.% prepared by copolymerizing ethylene and one or more C₃-C₈-1-alkenes.

In some embodiments, the specific pressure reduction Δp/h in the riser unit is in the range from 500 Pa/m to 3000 Pa/m, with h being the height of the riser unit and Δp being the pressure difference between the bottom and the top of the riser unit.

In some embodiments, a barrier fluid in liquid form is fed into the polymerization unit in which the growing polymer particles flow downward in a densified form.

In some embodiments, gaseous or liquid streams comprising the main monomer and optionally one or more comonomers, inert components and/or hydrogen are fed into the downcomer at one or more monomer feeding points.

In some embodiments, gaseous or liquid streams comprising the main monomer and optionally one or more comonomers, inert components or hydrogen are fed at at least 3 monomer feeding points into the downcomer and the hold-up of polymer particles between two adjacent monomer feeding points is at the most 35 wt.% of total hold-up of polymer particles in the downcomer.

In some embodiments, the downcomer has sub-zones which differ in the composition of the reaction gas mixtures within the sub-zones of the downcomer.

In some embodiments, the gas-phase polymerization reactor comprising the riser unit and the downcomer is part of a reactor cascade.

In some embodiments, the reactor cascade comprises a fluidized bed reactor upstream of the gas-phase polymerization reactor comprising the riser unit and the downcomer.

In some embodiments, the polymerization catalyst is a Ziegler- or Ziegler-Natta-catalyst.

In some embodiments, the olefin polymer is an ethylene polymer having a density of from 0.916 to 0.964 g/cm³, more preferably from 0.935 to 0.960 g/cm³, determined according to DIN EN ISO 1183-1:2004, Method A (Immersion) and a MFR_{21.6} at a temperature of 190 °C under a load of 21.6 kg, determined according to DIN EN ISO 1133-1:2012-03, of from 0.5 to 300 g/10 min.

### BRIEF DESCRIPTION OF THE DRAWINGS

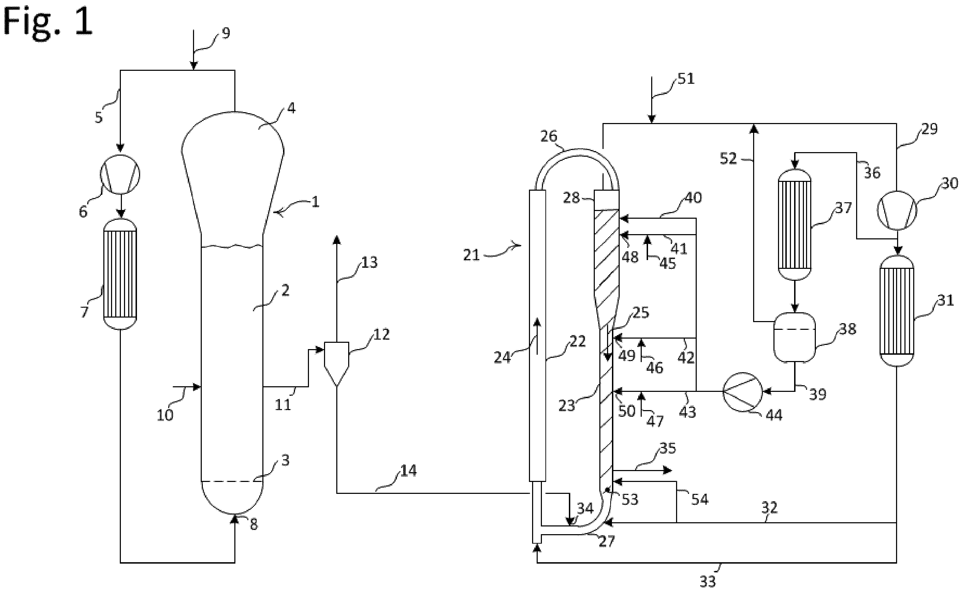

Figure 1 shows schematically a set-up for carrying out the process of the present disclosure.

### DETAILED DESCRIPTION OF THE INVENTION

The present disclosure provides a process for preparing an olefin polymer comprising polymerizing one or more olefins in the presence of a polymerization catalyst. Olefins which may be employed in the process of the present disclosure are especially 1-olefins, i.e. hydrocarbons having terminal double bonds, without being restricted thereto. Suitable olefins can be functionalized olefinically unsaturated compounds such as ester or amide derivatives of acrylic or methacrylic acid, for example acrylates, methacrylates, or acrylonitrile. Preference is given to nonpolar olefinic compounds, including aryl-substituted 1-olefins. Particularly preferred 1-olefins are linear or branched C₂-C₁₂-1-alkenes, in particular linear C₂-C₁₀-1-alkenes such as ethylene, propylene, 1-butene, 1-pentene, 1-hexene, 1-heptene, 1-octene, 1-decene or branched C₂-C₁₀-1-alkenes such as 4-methyl-1-pentene, conjugated and nonconjugated dienes such as 1,3-butadiene, 1,4-hexadiene or 1,7-octadiene or vinylaromatic compounds such as styrene or substituted styrene. It is also possible to polymerize mixtures of various 1-olefins. Suitable olefins also include ones in which the double bond is part of a cyclic structure which can have one or more ring systems. Examples are cyclopentene, norbornene, tetracyclododecene or methylnorbornene or dienes such as 5-ethylidene-2-norbornene, norbornadiene or ethylnorbornadiene. It is also possible to polymerize mixtures of two or more olefins.

The process is in particular suitable in the homopolymerization or copolymerization of ethylene or propylene and is especially preferred for the homopolymerization or copolymerization of ethylene. Preferred comonomers in propylene polymerization are up to 40 wt.% of ethylene and/or 1-butene, preferably from 0.5 wt.% to 35 wt.% of ethylene and/or 1-butene. As comonomers in ethylene polymerization, preference is given to using up to 20 wt.%, more preferably from 0.01 wt.% to 15 wt.% and especially from 0.05 wt.% to 12 wt.% of C₃-C₈-1-alkenes, in particular 1-butene, 1-pentene, 1-hexene and/or 1-octene. Particular preference is given to a process in which ethylene is copolymerized with from 0.1 wt.% to 12 wt.% of 1-hexene and/or 1-butene.

The polymerization of olefins can be carried out using all customary olefin polymerization catalysts. That means the polymerization can be carried out using Phillips catalysts based on chromium oxide, using Ziegler- or Ziegler-Natta-catalysts, or using single-site catalysts. For the purposes of the present disclosure, single-site catalysts are catalysts based on chemically uniform transition metal coordination compounds. Furthermore, it is also possible to use mixtures of two or more of these catalysts for the polymerization of olefins. Such mixed catalysts are often designated as hybrid catalysts. The preparation and use of these catalysts for olefin polymerization are generally known.

Preferred catalysts are of the Ziegler type preferably comprising a compound of titanium or vanadium, a compound of magnesium and optionally an electron donor compound and/or a particulate inorganic oxide as support.

As titanium compounds, use is generally made of the halides or alkoxides of trivalent or tetravalent titanium, with titanium alkoxy halogen compounds or mixtures of various titanium compounds also being possible. Examples of suitable titanium compounds are TiBr₃, TiBr₄, TiCl₃, TiCl₄, Ti(OCH₃)Cl₃, Ti(OC₂H₅)Cl₃, Ti(O-i-C₃H₇)Cl₃, Ti(O-n-C₄H₉)Cₗ₃, Ti(OC₂H₅)Br₃, Ti(O-n-C₄H₉)Br₃, Ti(OCH₃)₂Cl₂, Ti(OC₂H₅)₂Cₗ₂, Ti(O-n-C₄H₉)₂Cₗ₂, Ti(OC₂H₅)₂Br₂, Ti(OCH₃)₃Cl, Ti(OC₂H₅)₃Cl, Ti(O-n-C₄H₉)₃Cl, Ti(OC₂H₅)₃Br, Ti(OCH₃)₄, Ti(OC₂H₅)₄ or Ti(O-n-C₄H₉)₄. Preference is given to using titanium compounds which comprise chlorine as the halogen. Preference is likewise given to titanium halides which comprise only halogen in addition to titanium and among these especially titanium chlorides and in particular titanium tetrachloride. Among the vanadium compounds, particular mention may be made of the vanadium halides, the vanadium oxyhalides, the vanadium alkoxides and the vanadium acetylacetonates. Preference is given to vanadium compounds in the oxidation states 3 to 5.

In the production of the solid component, at least one compound of magnesium is preferably additionally used. Suitable compounds of this type are halogen-comprising magnesium compounds such as magnesium halides and in particular the chlorides or bromides and magnesium compounds from which the magnesium halides can be obtained in a customary way, e.g. by reaction with halogenating agents. For the present purposes, halogens are chlorine, bromine, iodine or fluorine or mixtures of two or more halogens, with preference being given to chlorine or bromine and in particular chlorine.

Possible halogen-comprising magnesium compounds are in particular magnesium chlorides or magnesium bromides. Magnesium compounds from which the halides can be obtained are, for example, magnesium alkyls, magnesium aryls, magnesium alkoxy compounds or magnesium aryloxy compounds or Grignard compounds. Suitable halogenating agents are, for example, halogens, hydrogen halides, SiCl₄ or CCl₄ and preferably chlorine or hydrogen chloride.

Examples of suitable, halogen-free compounds of magnesium are diethylmagnesium, di-n-propylmagnesium, diisopropylmagnesium, di-n-butylmagnesium, di-sec-butylmagnesium, di-tert-butylmagnesium, diamylmagnesium, n-butylethylmagnesium, n-butyl-sec-butylmagnesium, n-butyloctylmagnesium, diphenylmagnesium, diethoxymagnesium, di-n-propyloxymagnesium, diisopropyloxymagnesium, di-n-butyloxymagnesium, di-sec-butyloxymagnesium, di-tert-butyl-oxymagnesium, diamyloxymagnesium, n-butyloxyethoxymagnesium, n-butyloxy-sec-butyl-oxymagnesium, n-butyloxyoctyloxymagnesium and diphenoxymagnesium. Among these, preference is given to using n-butylethylmagnesium or n-butyloctylmagnesium.

Examples of Grignard compounds are methylmagnesium chloride, ethylmagnesium chloride, ethylmagnesium bromide, ethylmagnesium iodide, n-propylmagnesium chloride, n-propylmagnesium bromide, n-butylmagnesium chloride, n-butylmagnesium bromide, sec-butylmagnesium chloride, sec-butylmagnesium bromide, tert-butylmagnesium chloride, tert-butylmagnesium bromide, hexylmagnesium chloride, octylmagnesium chloride, amyl-magnesium chloride, isoamylmagnesium chloride, phenylmagnesium chloride and phenylmagnesium bromide.

As magnesium compounds for producing the particulate solids, preference is given to using, apart from magnesium dichloride or magnesium dibromide, the di(C₁-C₁₀-alkyl)magnesium compounds. Preferably, the Ziegler- or Ziegler-Natta-catalyst comprises a transition metal selected from titanium, zirconium, vanadium, chromium.

Suitable electron donor compounds for preparing Ziegler type catalysts are for example alcohols, glycols, esters, ketones, amines, amides, nitriles, alkoxysilanes and aliphatic ethers. These electron donor compounds can be used alone or in mixtures with other electron donor compounds.

Preferred alcohols are those of formula R¹OH in which the R¹ group is a C₁-C₂₀ hydrocarbon group. Preferably, R¹ is a C₁-C₁₀ alkyl group. Specific examples are methanol, ethanol, iso-propanol and n-butanol. Preferred glycols are those having a total number of carbon atoms lower than 50. Among them particularly preferred are the 1,2 or 1,3 glycols having a total number of carbon atoms lower than 25. Specific examples are ethylene glycol, 1,2-propylene glycol and 1,3-propylene glycol. Preferred esters are the alkyl esters of C₁-C₂₀ aliphatic carboxylic acids and in particular C₁-C₈ alkyl esters of aliphatic mono carboxylic acids such as ethyl acetate, methy formate, ethyl formate, methyl acetate, propyl acetate, i-propyl acetate, n-butyl acetate, i-butyl acetate. Preferred amines are those of formula NR²₃ in which the R² groups are, independently, hydrogen or a C₁-C₂₀ hydrocarbon group with the proviso that the R² groups are not simultaneously hydrogen. Preferably, R² is a C₁-C₁₀alkyl group. Specific examples are diethylamine, diisopropylamine and triethylamine. Preferred amides are those of formula R³CONR⁴₂ in which R³ and R⁴ are, independently, hydrogen or a C₁-C₂₀ hydrocarbon group. Specific examples are formamide and acetamide. Preferred nitriles are those of formula R¹CN where R¹ has the same meaning given above. A specific example is acetonitrile. Preferred alkoxysilanes are those of formula R⁵ₐR⁶_{b}Si(OR⁷)_{c}, where a and b are integer from 0 to 2, c is an integer from 1 to 4 and the sum (a+b+c) is 4; R⁵, R⁶, and R⁷, are alkyl, cycloalkyl or aryl radicals with 1-18 carbon atoms optionally containing heteroatoms. Particularly preferred are the silicon compounds in which a is 0 or 1, c is 2 or 3, R⁶ is an alkyl or cycloalkyl group, optionally containing heteroatoms, and R⁷ is methyl. Examples of such preferred silicon compounds are methyltrimethoxysilane, dimethyldimethoxysilane, trimethylmethoxysilane and t-butyltrimethoxysilane.

Preferred electron donor compounds are selected from the group consisting of amides, esters, and alkoxysilanes.

Catalysts of the Ziegler type are usually polymerized in the presence of a cocatalyst. Preferred cocatalysts are organometallic compounds of metals of Groups 1, 2, 12, 13 or 14 of the Periodic Table of Elements, in particular organometallic compounds of metals of group 13 and especially organoaluminum compounds. Preferred cocatalysts are for example organometallic alkyls, organometallic alkoxides, or organometallic halides.

Preferred organometallic compounds comprise lithium alkyls, magnesium or zinc alkyls, magnesium alkyl halides, aluminum alkyls, silicon alkyls, silicon alkoxides and silicon alkyl halides. More preferably, the organometallic compounds comprise aluminum alkyls and magnesium alkyls. Still more preferably, the organometallic compounds comprise aluminum alkyls, preferably trialkylaluminum compounds. Preferably, the aluminum alkyls comprise, for example, trimethyl-aluminum, triethylaluminum, tri-isobutylaluminum, tri-n-hexylaluminum and the like.

The process of the present disclosure is characterized in that the polymerization is carried out in a gas-phase polymerization reactor comprising a riser unit, in which growing polymer particles flow upwards under fluidization, fast fluidization or transport conditions, and a downcomer, in which growing polymer particles flow downward in a densified form. According to the process of the present disclosure, a gas-phase polymerization reactor has to be understood as one container in which the polymerization is carried out in one interconnected gas-phase. Accordingly, the pressures in the different polymerization zones within this container are essentially the same, apart from pressure differences resulting from flow resistances in gas-phases having high flow velocities, and the conditions in the polymerization zones cannot be varied independently. A polymerization zone is a part of the gas-phase polymerization reactor in which the polymerization takes place under identical or substantially identical conditions. For a polymerization, in which a thorough mixing of the polymer particles occurs, e.g. a polymerization in a fluidized-bed or in a stirred bed of polymer particles, the polymerization zone is the volume of this mixed bed of polymer particles. For a polymerization, in which the polymer particles are transported through a part of the reactor, a polymerization zone is the volume between two monomer feeding points. A monomer feeding point is then defined as a position along the path of the transported polymer particles or a height of a vertically oriented reactor part of the polymerization reactor at which the main monomer and optionally one or more comonomers are fed into the reactor through one or more feeding lines.

In a preferred embodiment of the present disclosure, the riser unit, in which the growing polymer particles flow upwards, comprises a fluidized bed of growing polymer particles. The riser unit then operates as thoroughly mixed gas-phase reactor such as a fluidized bed reactor.

Fluidized-bed reactors are reactors in which the polymerization takes place in a bed of polymer particles which is maintained in a fluidized state by feeding in a reaction gas mixture at the lower end of a reactor, usually below a gas distribution grid having the function of dispensing the gas flow, and taking off the gas again at its upper end. The reaction gas mixture is then returned to the lower end to the reactor via a recycle line equipped with a compressor and a heat exchanger for removing the heat of polymerization. The velocity of the reaction gas mixture has to be sufficiently high firstly to fluidize the mixed bed of finely divided polymer present in the tube serving as polymerization zone and secondly to remove the heat of polymerization effectively.

When a polymerization unit comprising a fluidized bed of growing polymer particles is employed as riser unit, the downcomer may be positioned within, around or adjacent to the gas-phase reactor. It is also possible to employ two or more separated polymerization units, in which growing polymer particles flow downward in a densified form, as downcomer.

In an especially preferred embodiment of the present disclosure, the riser unit is a riser, in which an upward movement of growing polymer particles occurs under fast fluidization or transport conditions. Fast fluidization conditions inside the riser are established by feeding a reaction gas mixture at a velocity higher than the transport velocity of the polymer particles. The velocity of the reaction gas mixture is generally comprised between 0.5 and 15 m/s, preferably between 0.8 and 5 m/s. The terms "transport velocity" and "fast fluidization conditions" are well known in the art. For a definition of those terms see, for example, "D. Geldart, Gas Fluidization Technology, page 155 et seq., J. Wiley & Sons Ltd., 1986".

Caused by the hydrostatic pressure of the gas-polymer mixture within the riser unit, there exists a pressure difference between the bottom of the riser unit and the top of the riser unit. Because the density of the polymer in the polymer particles is much higher than the density of the surrounding gas, this pressured difference Δp between the bottom and the top of the riser unit is correlated to the volume fraction of polymer in the gas-polymer mixture within the rise unit and the specific pressure reduction Δp/h in the riser unit, with h being the height of the riser unit, is accordingly a measure for this volume fraction.

In a preferred embodiment of the present disclosure, the specific pressure reduction Δp/h in the riser unit is in the range from 500 Pa/m to 3000 Pa/m, more preferably from 1000 Pa/m to 2500 Pa/m.

The gas-phase reactor of the present disclosure comprises a polymerization zone in which the growing polymer particles flow downward in a densified form. Such polymerization units may be called "downcomer" but are sometimes also designated as "moving bed" or "settled bed" unit or reactor. Throughout the present disclosure, the term "densified form" of the polymer means that the ratio between the mass of polymer and the reactor volume is higher than 80% of the "poured bulk density" of the obtained polymer. Thus, for instance, in case of a polymer bulk density equal to 420 kg/m³, a "densified form" of the polymer implies that the polymer mass/reactor volume ratio is at least 336 kg/m³. The "poured bulk density" of a polymer is a parameter well known to the person skilled in the art: it can be measured according to DIN EN ISO 60 : 1999. The density of solid inside the reactor is defined as mass of polymer per volume of reactor occupied by the polymer.

Typically, a downcomer is a polymerization unit containing a bed of growing polymer particles, which moves downwards in a substantially plug flow mode. By "plug flow mode" it is meant that there is little or preferably no backmixing of the polymer particles. In a preferred embodiment of the process according to the present disclosure, the polymer particles flow downwards in the downcomer with a velocity of from 0.01 to 0.7 m/s, preferably from 0.1 to 0.6 m/s, and more preferably from 0.15 to 0.5 m/s.

For replacing reacted olefins and for controlling the gas flow within the downcomer, gaseous or liquid feed streams may be introduced at one or more positions into the downcomer. The feed streams preferably comprise the main monomer and may further comprise one or more comonomers, inert components such as propane, or hydrogen. Depending on the amounts of added gaseous or liquid feed streams to the downcomer and the pressure conditions within the downcomer, the gaseous medium surrounding the polymer particles can be designed to move downwards concurrently with the polymer particles or upward countercurrently to the polymer particles. When feeding liquid streams to the downcomer, these liquid streams preferably vaporize within the downcomer, contributing to the composition of the reaction gas mixture within the downcomer. When operating the downcomer with more than one feed stream, the feeding points for introducing the feed streams into the downcomer are preferably evenly distributed over the height of the downcomer.

In a preferred embodiment of the present disclosure, the bottom of the downcomer is equipped with a control valve for controlling the flow of the growing polymer particles from the downcomer into the riser unit. The control valve is preferably a mechanical valve, such as a simple or double butterfly valve or a ball valve. Preferably a stream of a gas, sometimes denominated as "dosing gas", is fed into the lower part of the downcomer at one or more positions shortly above the control valve to facilitate the flow of the growing polymer particles through the control valve downstream of the compressor. The dosing gas is preferably taken from a recycling stream of unreacted monomers. By varying the opening of the control valve and/or varying the flow rate of the dosing gas, it is possible to adjust the velocity of the polymer particles within the downcomer.

In a most preferred embodiment of the present disclosure, the gas-phase polymerization reactor is a multizone circulating reactor. Such reactors are, for example, described in WO 97/04015 A1 and WO 00/02929 A1 and have two interconnected polymerization zones, a riser, in which the growing polymer particles flow upward under fast fluidization or transport conditions and a downcomer, in which the growing polymer particles flow in a densified form under the action of gravity. The polymer particles leaving the riser enter the downcomer and the polymer particles leaving the downcomer are reintroduced into the riser, thus establishing a circulation of polymer between the two polymerization zones and the polymer is passed alternately a plurality of times through these two zones. In such polymerization reactors, a solid/gas separator is arranged above the downcomer to separate the polyolefin and reaction gaseous mixture coming from the riser. The growing polyolefin particles enter the downcomer and the separated reaction gas mixture of the riser is continuously recycled through a gas recycle line to one or more points of reintroduction into the polymerization reactor. Preferably, the major part of the recycle gas is recycled to the bottom of the riser. The recycle line is preferably equipped with a compressor and a heat exchanger for removing the heat of polymerization. Preferably, a line for the catalyst feed is arranged on the riser and a polymer discharge system is located in the bottom portion of the downcomer. The introduction of make-up monomers, comonomers, hydrogen and/or inert components may occur at various points along the riser and the downcomer.

Carrying out the polymerization in a polymerization reactor comprising a riser, which operates under fast fluidization or transport conditions, brings about the advantage that all growing polymer particles pass repeatedly all polymerization zones of the polymerization reactor. It is so possible to produce within one gas-phase polymerization reactor homogeneous multi-modal olefin polymers with improved polymer property combinations.

The polymerization of the present disclosure is preferably carried out in the presence of an inert gas such as nitrogen or alkanes having from 1 to 10 carbon atoms such as methane, ethane, propane, n-butane, isobutane, n-pentane, isopentane or n-hexane or mixtures thereof. The use of nitrogen or propane as inert gas, if appropriate in combination with further alkanes, is preferred. In especially preferred embodiments of the present disclosure, the polymerization is carried out in the presence of a C₃-C₅ alkane as polymerization diluent and most preferably in the presence of propane, especially in the case of homopolymerization or copolymerization of ethylene. The reaction gas mixture may further comprise additional components such as molecular weight regulators like hydrogen or polymerization inhibitors like carbon monoxide or water. The components of the reaction gas mixture may be fed into the gas-phase polymerization reactor in gaseous form or as liquid which vaporizes within the reactor. The reaction gas mixtures within the reactor additionally comprise the olefins to be polymerized, i.e. a main monomer and one or more optional comonomers.

In a preferred embodiment of the present disclosure, the gas-phase polymerization reactor comprises two or more polymerization zones and the polymerization zones have a content of inert components in the reaction gas mixture from 30 to 99 vol.%, more preferably from 50 to 95 vol.%, and especially from 60 to 90 vol.%.

According to a preferred embodiment of the present disclosure, the reaction gas mixture leaving the riser unit is partially or totally prevented from entering the downcomer for establishing different polymerization conditions between the riser unit and at least a part of the downcomer. This can for example be achieved by feeding a barrier fluid in form of a gas and/or liquid mixture into the downcomer, preferably in the upper part of the downcomer. The barrier fluid should have a suitable composition, different from that of the gas mixture present in the riser unit. The amount of added barrier fluid can be adjusted in a way that an upward flow of gas countercurrent to the flow of the polymer particles is generated, particularly at the top thereof, acting as a barrier to the gas mixture entrained with the particles coming from the riser unit.

The barrier fluid comes preferably from a recycle gas stream and is more preferably obtained by partly condensing the stream. As a consequence, the barrier fluid may contain, besides the monomers to be polymerized, also inert compounds used as a polymerization diluent like nitrogen or alkanes having from 1 to 10 carbon atoms, hydrogen or other components of the reaction gas mixture.

The preparation of the barrier fluid may be accomplished by separating off a part of the recycle gas stream, preferably downstream of the compressor and upstream of the heat exchanger comprised in the recycle line, passing the separated gas through a heat-exchanger for partly condensing and separating the resulting liquid-gas mixture in a liquid and a gaseous stream. The barrier fluid has preferably a composition that the gas produced by vaporizing the barrier fluid has less than 0.5 vol.% hydrogen, more preferably less than 0.2 vol.% hydrogen and especially less than 0.1 vol.% hydrogen. Preferably, a feed stream comprising ethylene and optionally one or more comonomers is introduced into the downcomer together with the barrier fluid or in close proximity to the feeding point of the barrier fluid.

Preferably, the barrier fluid is fed in liquid form into the upper part of the polymerization unit, in which the growing polymer particles flow downward in a densified form.

According to a preferred embodiment of the present disclosure, the polymerization unit in which the growing polymer particles flow downward in a densified form has at least two sub-zones which differ in the composition of the reaction gas mixture within these sub-zones of the downcomer. The different gas compositions can be established by introducing appropriated liquid or gaseous feed streams into a middle part of the downcomer. In case of an overall downward gas stream, the gas composition in a lower part of the downcomer is then a combination of the gas streaming downwards through the upper part of the downcomer and the gas components derived from the additionally injected liquid or gaseous feed streams dosed into the middle part(s) of the downcomer. In case of an overall upward gas stream, the gas composition in an upper part of the downcomer is then a combination of the gas streaming upwards through the lower part of the downcomer and the gas components derived from the additionally injected liquid or gaseous feed streams dosed into the middle part(s) of the downcomer. In another embodiment of the present disclosure, a major part of the streams fed to the downcomer are fed to a middle part of the downcomer and so creating an upward gas stream in one or more upper sub-zones of the downcomer and creating a downward gas stream in one or more lower sub-zones of the downcomer. The appropriate gas compositions in the respective sub-zones can then be established by feeding in the vicinity of the feeding point(s) of the major part of feed stream(s) additional feed streams for creating the intended gas composition of the reaction gas mixtures.

The different sub-zones of the downcomer can differ in their composition from the composition of the reaction gas mixture in the riser unit. In a preferred embodiment of the present disclosure at least one of the sub-zones of the downcomer, preferably the lowest sub-zone, has a composition of the reaction gas mixture which is substantially similar to the gaseous composition reacting in the riser unit. When producing olefin polymers of different composition in different polymerization zones of a circulating gas-phase polymerization reactor, operating a part of the downcomer under conditions which are substantially similar to the gaseous composition reacting in the riser unit allows increasing the proportion of the polymer component obtained in the riser unit in the final olefin polymer.

The process of the present disclosure is characterized in that the hold-up of polymer particles in the downcomer is from 55 wt.% to 80 wt.% of the total hold-up of polymer particles in the gas-phase polymerization reactor. Preferably the hold-up of polymer particles in the downcomer is from 60 wt.% to 75 wt.% of the total hold-up of polymer particles in the gas-phase polymerization reactor. The hold-up of polymer in a polymerization zone of the polymerization reactor is the amount of polymer in this polymerization zone. The hold-up is given by the density within the polymerization zone and the volume within the polymerization zone which is occupied by polymer particles. Accordingly, the hold-up of the polymer particles in the riser unit is mainly given by the volume of the riser unit and the density of the gas-polymer mixture within the riser unit, while the density of the gas-polymer mixture within the riser unit depends from the amount of gas used to fluidize or fast-fluidize the polymer particles. The hold-up of the polymer particles in the downcomer is mainly given by the volume of the downcomer, the filling level of the polymer particle within the downcomer and the bulk density of the polymer particles within the downcomer. When establishing an upward flow the gaseous medium surrounding the polymer particles within the downcomer, it is further possible to reduce the particle density within the downcomer by increasing the upward gas velocity within the downcomer and so loosening the polymer particles.

The amount of polymer produced in a polymerization zone depends on the hold-up of polymer particles in this polymerization zone because, in catalytic olefin polymerization, the active catalyst is imbedded into the growing polymer particles. However, the amount of produced polymer also depends on additional factors such as the monomer concentration in the polymerization zone or the polymerizations temperature. Furthermore, the possibility to establish two or more sub-zones of different reaction gas compositions in the downcomer increases the options for tailoring the composition of the final olefin polymer.

Operating the gas-phase polymerization reactor with a hold-up of polymer particles in the downcomer of from 55 wt.% to 80 wt.% of the total hold-up of polymer particles in the gas-phase polymerization reactor brings about the advantage that the polymerization can be carried out with a high space-time yield. Operating the polymerization with a hold-up of polymer particles in the downcomer in the range from 55 wt.% to 80 wt.% of the total hold-up of polymer particles in the gas-phase reactor further allows to design the reactor with a relative small volume of the riser unit. Accordingly, only a smaller compressor is needed to fluidize or fast-fluidize the polymer particles. Consequently, as well the efforts for constructing the reactor as for operating the reactor are reduced. Moreover, the polymerization conditions within the riser unit easily allow varying these conditions within the riser unit, such as e.g. increasing the monomer partial pressures, without being confronted with operational problems such as the formation of chunks or agglomerates or plugging of a product discharge system.

In a preferred embodiment of the present disclosure, gaseous or liquid streams comprising the main monomer and optionally one or more comonomers, inert components and/or hydrogen are fed at at at least 3 monomer feeding points into the downcomer and the hold-up of polymer particles between two adjacent monomer feeding points is at the most 35 wt.% of total hold-up of polymer particles in the downcomer. More preferably, gaseous or liquid streams comprising the main monomer and optionally one or more comonomers, inert components and/or hydrogen are fed at at at least 4 monomer feeding points into the downcomer and the hold-up of polymer particles between two adjacent monomer feeding points is at the most 25 wt.% of total hold-up of polymer particles in the downcomer. In an especially preferred embodiment, gaseous or liquid streams comprising the main monomer and optionally one or more comonomers, inert components and/or hydrogen are fed at at least 5 monomer feeding points into the downcomer and the hold-up of polymer particles between two adjacent monomer feeding points is at the most 20 wt.% of total hold-up of polymer particles in the downcomer.

The polymerization in the gas-phase polymerization reactor can also be carried out in a condensing or super-condensing mode, in which part of the circulating reaction gas mixture is cooled to below the dew point and returned to the reactor separately as a liquid and a gas-phase or together as a two-phase mixture in order to make additional use of the enthalpy of vaporization for cooling the reaction gas.

In a preferred embodiment of the present disclosure, the gas-phase polymerization reactor comprising the riser unit and the downcomer is part of a reactor cascade. The further polymerization reactors of the reactor cascade can be any kind of low-pressure polymerization reactors such as gas-phase reactors or suspension reactors. If the polymerization process of the reactor cascade includes a polymerization in suspension, the suspension polymerization is preferably carried out upstream of the gas-phase polymerization. Suitable reactors for carrying out such a suspension polymerization are for example loop reactors or stirred tank reactors. Suitable suspension media are inter alia inert hydrocarbons such as isobutane or mixtures of hydrocarbons or else the monomers themselves. Such additional polymerization stages, which are carried out in suspension, may also include a pre-polymerization stage. If the multistage polymerization of olefins comprises additional polymerization stages carried out in gas-phase, the additional gas-phase polymerization reactors can be any type of gas-phase reactors like horizontally or vertically stirred gas-phase reactors, fluidized-bed reactors or multizone circulating reactors. Such additional gas-phase polymerization reactors may be arranged downstream or upstream of the gas-phase polymerization reactor. In an especially preferred embodiment of the present disclosure, the gas-phase polymerization reactor comprising the riser unit and the downcomer is part of a reactor cascade in which a fluidized-bed polymerization reactor is arranged upstream of the gas-phase polymerization reactor.

Figure 1 shows schematically a set-up of a polymerization reactor cascade comprising a fluidized-bed reactor and a multizone circulating reactor for carrying out the process of the present disclosure.

The first gas-phase reactor, fluidized-bed reactor (1), comprises a fluidized bed (2) of polyolefin particles, a gas distribution grid (3) and a velocity reduction zone (4). The velocity reduction zone (4) is generally of increased diameter compared to the diameter of the fluidized-bed portion of the reactor. The polyolefin bed is kept in a fluidization state by an upwardly flow of gas fed through the gas distribution grid (3) placed at the bottom portion of the reactor (1). The gaseous stream of the reaction gas mixture leaving the top of the velocity reduction zone (4) via recycle line (5) is compressed by compressor (6), transferred to a heat exchanger (7), in which it is cooled, and then recycled to the bottom of the fluidized-bed reactor (1) at a point below the gas distribution grid (3) at position (8). The recycle gas can, if appropriate, be cooled to below the dew point of one or more of the recycle gas components in the heat exchanger so as to operate the reactor with condensed material, i.e. in the condensing mode. The recycle gas can comprise, besides unreacted monomers, also inert condensable gases, such as alkanes, as well as inert non-condensable gases, such as nitrogen. Make-up monomers, hydrogen, and optional inert gases or process additives can be fed into the reactor (1) at various positions, for example via line (9) upstream of the compressor (6); this non-limiting the scope of the invention. Generally, the catalyst is fed into the reactor (1) via a line (10) that is preferably placed in the lower part of the fluidized bed (2).

The polyolefin particles obtained in fluidized-bed reactor (1) are discontinuously discharged via line (11) and fed to a solid/gas separator (12) in order to avoid that the gaseous mixture coming from fluidized-bed reactor (1) enters the second gas-phase reactor. The gas leaving solid/gas separator (12) exits the reactor via line (13) as off-gas while the separated polyolefin particles are fed via line (14) to the second gas-phase reactor.

The second gas-phase reactor is a multizone circulating reactor (21) comprising a riser (22) and a downcomer (23) which are repeatedly passed by the polyolefin particles. Within riser (22), the polyolefin particles flow upward under fast fluidization conditions along the direction of arrow (24). Within downcomer (23) the polyolefin particles flow downward under the action of gravity along the direction of arrow (25). The riser (22) and the downcomer (23) are appropriately interconnected by the interconnection bends (26) and (27).

After flowing through the riser (22), the polyolefin particles and the reaction gas mixture leave riser (22) and are conveyed to a solid/gas separation zone (28). This solid/gas separation can be effected by using conventional separation means such as, for example, a centrifugal separator like a cyclone. From the separation zone (28) the polyolefin particles enter downcomer (23).

The reaction gas mixture leaving separation zone (28) is recycled to riser (22) by means of a recycle line (29), equipped with a compressor (30) and a heat exchanger (31). Downstream of heat exchanger (31), recycle line (29) splits and the gaseous mixture is divided into two separated streams: Line (32) conveys a part of the recycle gas into the interconnection bend (27), while line (33) conveys another part the recycle gas to the bottom of riser (22), so as to establish fast fluidization conditions therein.

The polyolefin particles coming from the first gas-phase reactor via line (14) enter multizone circulating reactor (21) at the interconnection bend (27) in position (34). The polyolefin particles obtained in multizone circulating reactor (21) are continuously discharged from the bottom part of downcomer (23) via discharge line (35).

A part of the gaseous mixture leaving separation zone (28) exits recycle line (29) after having passed compressor (30) and is sent through line (36) to heat exchanger (37), where it is cooled to a temperature at which the monomers and the optional inert gas are partially condensed. A separating vessel (38) is placed downstream of heat exchanger (37). The separated liquid is withdrawn from separating vessel (38) via line (39) and fed to downcomer (23) through lines (40), (41), (42) and (43) by means of pump (44), wherein the feed stream introduced via line (40) is supplied to generate the barrier for preventing the reaction gas mixture of riser (22) from entering downcomer (23). Make-up monomers, make-up comonomers, and optionally inert gases and/or process additives can be introduced via lines (45), (46) and (47) into lines (41), (42) and (43) and then fed into downcomer (23) at monomer feeding points (48), (49) and (50). Make-up monomers, make-up comonomers, and optionally inert gases and/or process additives can further be introduced into recycle line (29) via line (51). The gaseous mixture obtained as gas-phase in separating vessel (38) is recirculated to recycle line (29) through line (52).

The bottom of downcomer (23) is equipped with a control valve (53) having an adjustable opening for adjusting the flow of polyolefin particles from downcomer (23) through interconnection bend (27) into riser (22). Above control valve (53), amounts of a recycle gas mixture coming from recycle line (29) though line (54) is introduced into downcomer (23) to facilitate the flow of the polyolefin particles through control valve (53).

The process of the present disclosure is particularly suitable for the preparation of polyethylenes having a density of from 0.916 to 0.964 g/cm³, more preferably from 0.935 to 0.960 g/cm³, determined according to DIN EN ISO 1183-1:2004, Method A (Immersion), and a MFR_{21.6} at a temperature of 190 °C under a load of 21.6 kg, determined according to DIN EN ISO 1133-1:2012-03, of from 0.5 to 300 g/10 min, more preferably of from 1 to 100 g/10 min, even more preferably of from 1.2 to 100 g/10 min and especially of from 1.5 to 50 g/10 min. Such polyethylenes are especially suitable for preparing blow molded articles.

### EXAMPLES

For determining the amount of chunks, the polymer powder discharged from the multizone circulating reactor (MZCR) was passed through a vibrating screen having screen openings of 10 mm. The material remaining on the screen corresponds to the amount of chunks having a diameter of more than 10 mm.

The melt flow rate MFR_{21.6} was determined according to DIN EN ISO 1133-1:2012-03 at a temperature of 190 °C under a load of 21.6 kg.

The melt flow rate MFR₅ was determined according to DIN EN ISO 1133-1:2012-03 at a temperature of 190 °C under a load of 5 kg.

The Flow Rate Ratio FRR is the ratio of MFR_{21.6} / MFR₅.

The density was determined according to DIN EN ISO 1183-1:2004, Method A (Immersion) with compression molded plaques of 2 mm thickness. The compression molded plaques were prepared with a defined thermal history: Pressed at 180 °C, 20MPa for 8 min with subsequent crystallization in boiling water for 30 min.

### Example 1

A polyethylene was prepared in a cascade of a fluidized-bed reactor and a multizone circulating reactor (MZCR) having two interconnected reaction zones as shown in Figure 1.

9.1 g/h of a Ziegler-Natta catalyst, which was prepared according to example 1 a of WO 2014/202420 A1 with a molar feed ratio of electron donor/Ti of 8, were fed using 5 kg/h of liquid propane to a first stirred precontacting vessel, into which also triisobutylaluminum (TIBA), diethylaluminum chloride (DEAC) and tetrahydrofuran (THF) were dosed. The weight ratio of triisobutylaluminum to diethylaluminum chloride was 7:1. The weight ratio of the aluminum alkyls to the catalyst solid was 5:1. The weight ratio of the aluminum alkyls to THF was 70:1. The first precontacting vessel was kept at 50 °C with a residence time of 30 minutes. The catalyst suspension of the first precontacting vessel was continuously transferred to a second stirred precontacting vessel, which was operated with a residence time of 30 minutes and kept also at 50 °C. The catalyst suspension was then transferred continuously to fluidized-bed reactor (1) via line (10).

In fluidized-bed reactor (1), ethylene was polymerized in the presence of propane as inert diluent using hydrogen as molecular weight regulator. 51 kg/h of ethylene and 140 g/h of hydrogen were fed to fluidized-bed reactor (1) via line (9). No comonomer was added. The polymerization was carried out at a temperature of 80 °C and a pressure of 2.9 MPa. The selected feed rates resulted in the reactor in an ethylene concentration of 11.1 vol.% and a hydrogen concentration of 14.4 vol.%.

The polyethylene obtained in fluidized-bed reactor (1) had a MFR2.16 of 8 g/10 min and a density of 0.967 g/cm³.

The polyethylene obtained in fluidized-bed reactor (1) was continuously transferred to multizone circulating reactor (21), which was operated at a pressure of 2.5 MPa and a temperature of 85 °C measured at the beginning of line (29) where the reaction gas mixture has just left separation zone (28). The riser (22) had an internal diameter of 174 mm and a length of 18.6 m. The downcomer (23) had a total length of 17.6 m, divided into an upper part of 4.5 m with an internal diameter of 306 mm, a lower part of 12.7 m with an internal diameter of 192 mm and in-between the upper part and the lower part a conical part having a length of 0.43 m. The final polymer was discontinuously discharged via line (35).

To prevent the reaction gas mixture of the riser (22) from entering the downcomer (23), 330 kg/h of a liquid stream were fed as barrier fluid into the upper part of the downcomer via line (40). The liquid for generating the barrier originated from partially condensing recycle gas mixture in heat exchanger (37) at working conditions of 52 °C and 2.5 MPa and separating liquid and gaseous components in separating vessel (38).

Additional monomers were fed to the downcomer at three monomer feeding points below the barrier. The combined quantity of fresh monomers fed into downcomer were 24 kg/h of ethylene and 0.6 kg/h of 1-hexene. Additionally, 6 kg/h of propane, 25 kg/h of ethylene and 70 g/h of hydrogen were fed through line (48) into recycle line (29).

Of the final olefin polymer produced in the cascade of fluidized-bed reactor and a multizone circulating reactor, 50% by weight were produced in the first reactor and 50% by weight were produced in the second reactor.

The polymerization conditions within the riser and the downcomer of the MZCR are indicated in Table 1. Table 1 further reports the properties of the final olefin polymer discharged from the multizone circulating reactor.

### Example 2

The polymerization of Example 1 was repeated under identical conditions except that a multizone circulating reactor (MZCR) was employed in which the riser (22) had an internal diameter of 147 mm and the lower part of the downcomer (23) had an internal diameter of 212 mm.

The polymerization conditions within the riser and the downcomer of the MZCR are indicated in Table 1. Table 1 further reports the properties of the final olefin polymer discharged from the multizone circulating reactor.

### Comparative Example A

The polymerization of Example 1 was repeated under identical conditions except that a multizone circulating reactor (MZCR) was employed in which the riser (22) had an internal diameter of 207 mm and the lower part of the downcomer (23) had an internal diameter of 158 mm.

The polymerization conditions within the riser and the downcomer of the MZCR are indicated in Table 1. Table 1 further reports the properties of the final olefin polymer discharged from the multizone circulating reactor.

**Table 1**

| | Example 1 | Example 2 | Comparative Example A |
|---|---|---|---|
| **Riser** | | | |
| Ethylene [vol.%] | 12.9 | 17.2 | 10.1 |
| Hydrogen [vol.%] | 3.4 | 4.7 | 2.5 |
| 1-Hexene [vol.%] | 0.50 | 0.65 | 0.40 |
| **Downcomer** | | | |
| Ethylene [vol.%] | 5.1 | 3.4 | 8.2 |
| Hydrogen [vol.%] | 0.24 | 0.23 | 0.21 |
| 1-Hexene [vol.%] | 0.9 | 0.9 | 0.8 |
| **MZCR conditions:** | | | |
| Volume downcomer [m³] | 0.527 | 0.607 | 0.409 |
| Volume riser [m³] | 0.442 | 0.316 | 0.623 |
| hold-up downcomer [kg] | 161 | 186 | 125 |
| hold-up riser [kg] | 87 | 62 | 123 |
| hold-up proportion downcomer [%] | 65 | 75 | 50 |
| hold-up proportion riser [%] | 35 | 25 | 50 |
| production rate downcomer [kg/h] | 24.9 | 24.8 | 25.1 |
| production rate riser [kg/h] | 25.1 | 25.2 | 24.9 |
| space-time-yield MZCR [kg/h m³] | 103.2 | 108.4 | 96.9 |
| Chunks (> 10mm) [g/h] | 5 | 0 | 80 |
| **Final polymer properties:** | | | |
| MFR_{21.6} [g/10 min] | 13.6 | 14.2 | 13.9 |
| FRR | 19 | 20 | 19 |
| Density [g/cm³] | 0.952 | 0.953 | 0.953 |

## Claims

1. A process for preparing an olefin polymer comprising polymerizing one or more olefins in the presence of a polymerization catalyst in a gas-phase polymerization reactor comprising a riser unit, in which growing polymer particles flow upwards under fluidization, fast fluidization or transport conditions, and a downcomer, in which growing polymer particles flow downward in a densified form, wherein the hold-up of polymer particles in the downcomer is from 55 wt.% to 80 wt.% of the total hold-up of polymer particles in the gas-phase polymerization reactor.

2. The process of claim 1, wherein the gas-phase polymerization reactor is a multizone circulating reactor in which the riser unit is a riser, in which growing polymer particles flow upwards under fast fluidization or transport conditions, and the riser and the downcomer are interconnected and polymer particles leaving the riser enter the downcomer and polymer particles leaving the downcomer enter the riser, thus establishing a circulation of polymer particles through the riser and the downcomer.

3. The process of claim 1, wherein the riser unit, in which the growing polymer particles flow upwards, comprises a fluidized bed of growing polymer particles.

4. The process of any of claims 1 to 3, wherein the gas-phase polymerization reactor comprises two or more polymerization zones and the polymerization zones have a content of inert components in the reaction gas mixture from 30 to 99 vol.%.

5. The process of any of claims 1 to 4, wherein the olefin polymer is an ethylene polymer prepared by homopolymerizing ethylene or copolymerizing ethylene with one or more comonomers.

6. The process of claim 5, wherein the ethylene polymer is an ethylene copolymer having a comonomer content from 0.01 wt.% to 15 wt.% prepared by copolymerizing ethylene and one or more C₃-C₈-1-alkenes.

7. The process of any of claims 1 to 6, wherein the specific pressure reduction Δp/h in the riser unit is in the range from 500 Pa/m to 3000 Pa/m, with h being the height of the riser unit and Δp being the pressure difference between the bottom and the top of the riser unit.

8. The process of any of claims 1 to 7, wherein a barrier fluid in liquid form is fed into the polymerization unit in which the growing polymer particles flow downward in a densified form.

9. The process of any of claims 1 to 8, wherein gaseous or liquid streams comprising the main monomer and optionally one or more comonomers, inert components and/or hydrogen are fed into the downcomer at one or more monomer feeding points.

10. The process of claim 9, wherein gaseous or liquid streams comprising the main monomer and optionally one or more comonomers, inert components or hydrogen are fed at at least 3 monomer feeding points into the downcomer and the hold-up of polymer particles between two adjacent monomer feeding points is at the most 35 wt.% of total hold-up of polymer particles in the downcomer.

11. The process of any of claims 1 to 10, wherein the downcomer has sub-zones which differ in the composition of the reaction gas mixtures within the sub-zones of the downcomer.

12. The process of any of claims 1 to 11, wherein the gas-phase polymerization reactor comprising the riser unit and the downcomer is part of a reactor cascade.

13. The process of claim 12, wherein the reactor cascade comprises a fluidized bed reactor upstream of the gas-phase polymerization reactor comprising the riser unit and the downcomer.

14. The process of any of claims 1 to 13, wherein the polymerization catalyst is a Ziegler- or Ziegler-Natta-catalyst.

15. The process of any of claims 1 to 14, wherein the olefin polymer is an ethylene polymer having a density of from 0.916 to 0.964 g/cm³, and a MFR_{21.6} at a temperature of 190 °C under a load of 21.6 kg, determined according to DIN EN ISO 1133-1:2012-03, of from 0.5 to 300 g/10 min.
